# EUROPEAN PATENT SPECIFICATION

(11) **EP 4 439 452 B1**
(45) Date of publication and mention of the grant of the patent: **27.05.2026**
(21) Application number: 24157813.7
(22) Date of filing: 15.02.2024
(51) Int. Cl.: G06T 7/00, G06T 7/246

(54) **SYSTEM FOR CONTINUOUSLY ACQUIRING IMAGES OF A THREAD DURING WINDING**
SYSTEM ZUR KONTINUIERLICHEN ERFASSUNG VON BILDERN EINES FADENS BEIM AUFWICKELN
SYSTÈME D'ACQUISITION CONTINUE D'IMAGES D'UN FIL PENDANT L'ENROULEMENT

(30) Priority: 28.03.2023 IT 202300005847
(43) Date of publication of application: 02.10.2024
(73) Proprietor: Savio Macchine Tessili S.p.A., 33170 Pordenone (IT)
(72) Inventor: D'AGNOLO, Fabio, I-33170 PORDENONE (IT); SALA, Riccardo, I-33170 PORDENONE (IT)
(74) Representative: Mitola, Marco

(56) References cited:
- EP-A2- 0 409 318
- EP-B1- 1 553 037
- CN-A- 106 468 666
- CN-A- 108 132 020
- CN-A- 109 799 190
- CN-U- 213 239 955
- JP-A- 2015 528 784
- WULFHORST B ET AL: "SENSOREN FUER DIE GESCHWINDIGKEITSMESSUNG AN GARNEN UND FLAECHGEBILDEN", TEXTIL PRAXIS INTERNATIONAL, KONRADIN VERLAG R.KOHLHAMMER GMBH. LEINFELDEN, DE, 1 July 1990 (1990-07-01), pages 591 - 596, XP000791228, ISSN: 0340-5028
- ALIAKSEI L PETSIUK ET AL: "Open Source 3-D Filament Diameter Sensor for Recycling, Winding and Additive Manufacturing Machines", ARXIV.ORG, CORNELL UNIVERSITY LIBRARY, 201 OLIN LIBRARY CORNELL UNIVERSITY ITHACA, NY 14853, 1 December 2020 (2020-12-01), XP081936204, DOI: 10.1115/1.4050762
- WANG QING ET AL: "Yarn speed and length measurement using optical method in real time", OPTICAL ENGINEERING, vol. 57, no. 10, 9 October 2018 (2018-10-09), 1000 20th St. Bellingham WA 98225-6705 USA, pages 104103 - 1, XP093178651, ISSN: 0091-3286, DOI: 10.1117/1.OE.57.10.104103

## Description

### FIELD OF APPLICATION

The present invention relates to a system for continuously acquiring images of a thread during winding.

### STATE OF THE ART

As is known, the awareness of the winding speed of a yarn represents a parameter of fundamental importance for the management of a textile machine, such as the monitoring of its productivity, the calculation of the processed thread size and the evaluation of the accuracy of the clearance measurements.

Typically, the average speeds of the winding process of a yarn can vary between 20 m/s and 30 m/s; moreover, due to the shape of the thread guide cylinders, speed fluctuations of up to ± 20% can occur in extremely short times (of the order of a few milliseconds), thus subjecting the yarn to very high instantaneous accelerations. It follows that, due to the inertia of the components in play and the need to accelerate/brake with extreme speed, it becomes practically impossible to acquire the instantaneous speed of the yarn by means of a purely mechanical system.

Laser detection systems exist on the market which measure the speed of the yarn in motion using the Doppler effect, but they are particularly disadvantageous because in order to operate successfully, they require the position of the thread to be fixed and stable over time, contrary to the continuous vibrations to which it is subjected during the winding process, making an instantaneous speed measurement impossible. Moreover, such devices are extremely expensive, as well as very delicate during use.

### PRESENTATION OF THE INVENTION

The need is therefore felt to resolve the drawbacks and limitations mentioned with reference to the prior art.

Such requirements are satisfied by a continuous image acquisition system of a thread during winding in accordance with claim 1.

### DESCRIPTION OF THE DRAWINGS

Further features and advantages of the present invention will be more clearly comprehensible from the description given below of preferred and non-limiting embodiments thereof, in which:
figure 1 depicts a schematic view of a continuous image acquisition system of a textile yarn in accordance with an embodiment of the present invention;
figure 2 depicts a schematic view of a continuous image acquisition system of a textile yarn in accordance with a further embodiment of the present invention;
figure 3 depicts a schematic view of a continuous image acquisition system of a textile yarn in accordance with a further embodiment of the present invention;
figure 4 depicts a schematic view of a continuous image acquisition system of a textile yarn in accordance with a further embodiment of the present invention.

The elements or parts of elements common to the embodiments described below will be indicated using the same reference numerals.

### DETAILED DESCRIPTION

With reference to the aforesaid figures, reference numeral 4 globally indicates a continuous image acquisition system of textile yarns 8.

It should be noted that the term thread or single thread or continuous thread refers to a single filament or continuous filament (for example in the case of silk, artificial or synthetic fibres), while the term yarn refers to a group of fibrils of varying lengths which are paralleled and joined together by twisting. Hereinafter, one or the other term will be used indifferently, it being understood that the applications of the present invention are not limited to one or the other type.

The continuous image acquisition system 4 of a yarn 8 comprises at least one vision system 12 comprising at least one camera 16 adapted to frame a section 20 of said yarn 8 in motion and to capture a plurality of frames of said section of the yarn 8 in motion. The yarn 8 typically runs along a substantially straight direction Y-Y.

The acquisition system 4 further comprises a control unit 24, operatively connected to the vision system 12, configured to identify at least one yarn identification portion in at least a first of said frames and to search for the recurrence of said at least one yarn identification portion in at least a second of said frames. The at least a first frame is captured at a time instant t1 and the at least a second frame is captured at a time instant t2 which temporally follows the time instant t1.

Advantageously, the control unit 24 is programmed to determine the speed of the yarn 8 as a function of the position of said at least one identifying portion in said at least a first frame and in said at least a second frame, and as a function of the elapsed time interval t2-t1. Obviously, said speed is calculated by means of the ratio between the distance travelled by the identification portion between the first and the second frame and the time t2-t1 passed between the first and the second frame.

In accordance with the invention the yarn identification portion comprises a yarn anomaly.

For example, said yarn abnormality can comprise defects and/or irregularities and/or hairs and/or chromatic variations and/or twisting variations of the yarn.

In accordance with a possible embodiment, the control unit 24 is configured to determine the thread size of the yarn 8 starting from the position of said at least one identifying portion in said at least a first frame and in said at least a second frame.

In accordance with a possible embodiment, the control unit 24 is configured to process said at least one portion of yarn by means of image processing software.

For example, said at least one camera 16 is provided with a sampling frequency (frame rate) less than or equal to 1 kHz.

Preferably, said sampling frequency (frame rate) of the chamber 16 is constant.

In accordance with a possible embodiment, the length of the section 20 of thread 8 framed by the camera 16 in each frame is greater than or equal to 20 mm: it is thereby possible to identify a section 20 of thread 8 sufficiently long to obtain a complete and accurate acquisition.

In accordance with a possible embodiment, the number of consecutive frames which are processed by the control unit 24 is greater than or equal to 3 and less than or equal to 7: it has been possible to verify that such a range constitutes a good compromise in terms of calculation times and costs of the acquisition system 4.

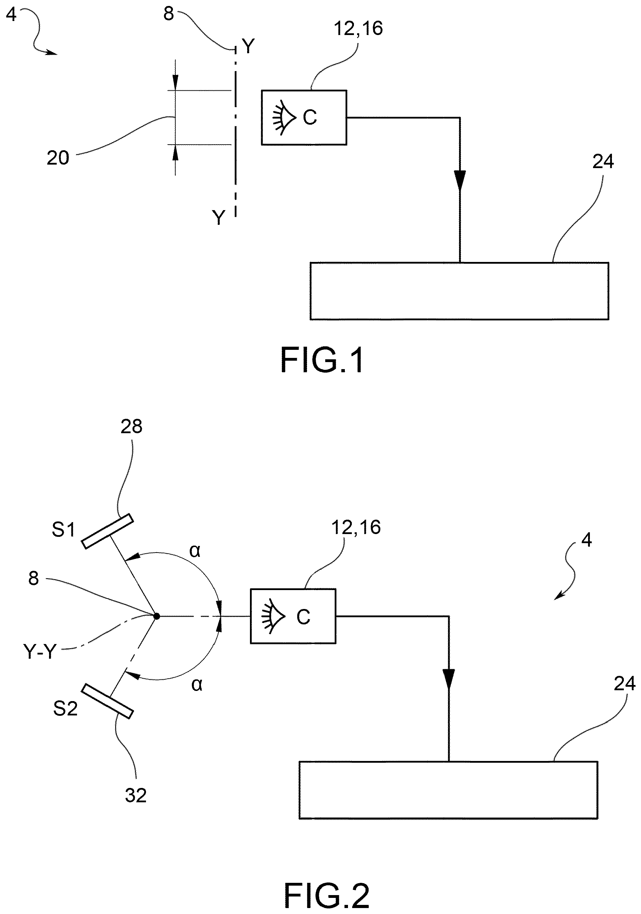

In accordance with the invention (figure 2), the vision system 12 comprises at least two mirrors: such a provision greatly improves the acquisition of the images of the yarn 8.

Preferably, said at least two mirrors 28, 32 are situated on the diametrically opposite side with respect to the camera 16, with respect to the yarn 8.

In accordance with a possible embodiment, said camera 16 and said at least two mirrors 28,32 are angularly equispaced by an angle α equal to 120°: thereby, the image of the thread 8 can be acquired from three different angles. Such a configuration is particularly advantageous if the thread 8 rotates around its axis parallel to the straight direction Y-Y and the anomaly, moving from one plane to another, becomes de facto unusable for speed measurement if framed from a single angle.

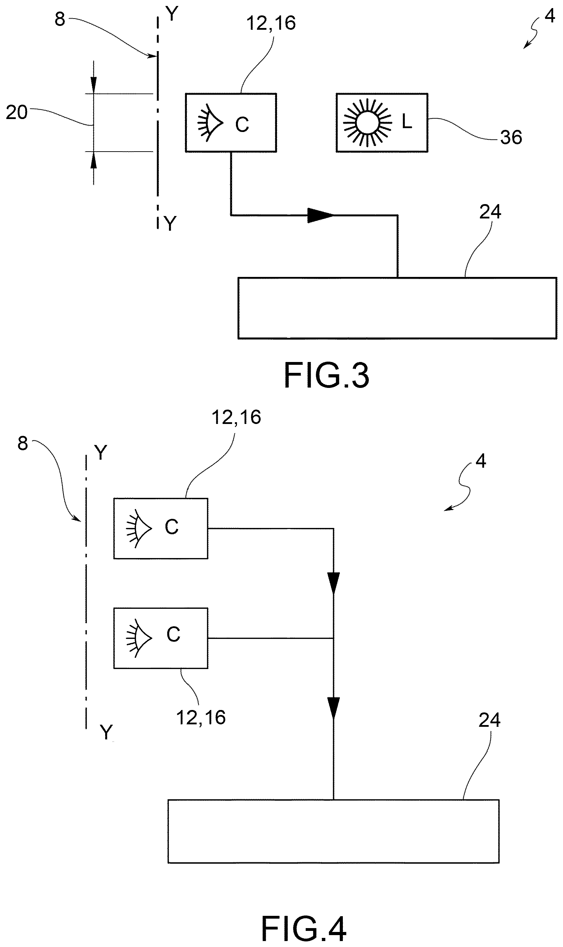

In accordance with a possible embodiment (figure 4), the vision system 12 comprises at least two cameras 16 placed at a preset distance along the direction Y-Y of the yarn and configured to frame said section 20 of yarn 8 in motion and to capture a plurality of frames of said section 20 of yarn 8 in motion: thereby the field of vision is multi-directional and the acquisition of the geometry of the yarn 8 is more complete.

Preferably, said at least two cameras 16 are mutually synchronized: thereby the relative frames capture exactly the same portion of yarn 8 from different angles.

In accordance with a possible embodiment, the acquisition system 4 comprises at least one illuminator 36 (figure 3).

Preferably, the at least one camera 16 and the at least one illuminator 36 are situated on the same side with respect to the yarn 8. It is thereby possible to see the actual thread 8, and not its shadow. In fact, the clearers of the prior art see the shadow of the thread 8, but thanks to the use of the camera 16 and the illuminator 36 arranged on the same side, it is possible to see the anomalies which the shadow would not show directly on the thread 8.

Advantageously, the at least one illuminator 36 is of the RGB type and/or with spectrum outside the visible range. Such a configuration can be used to improve image acquisition in the case of coloured and/or twisted and/or elasticised yarns 8 (core yarns) and/or in the presence of contaminating material (e.g., dispersed polypropylene fibres) .

As can be appreciated from the description, the present invention makes it possible to overcome the drawbacks mentioned in the prior art.

In particular, the use of the camera for the calculation of the yarn speed allows to obtain considerable technical advantages.

Firstly, it is possible to physically see the defects of the thread and characterize them more completely with respect to traditional optical clearer systems.

Furthermore, it is possible to physically see the joints, so the system can be coupled to predictive procedures of thread breaking at the same.

Furthermore, it is possible to know the instantaneous speed of the thread and thus calculate the thread size of the spool with extreme accuracy.

Furthermore, the knowledge of the instantaneous winding speed improves the effectiveness of the clearing operation, as it allows to correlate the extent of the defect to the speed of the thread in that instant, and not to an average speed as occurs in the solutions of the prior art. In fact, the defects generally change as a function of the instantaneous speed, whereby the average speed parameter is not very representative for the purpose of characterising the defect.

Furthermore, based on the considerations made on the repeatability of the speed profile generated by the various types of thread guide cylinder (2 revolutions, 3/2 revolutions, constant pitch, variable pitch), the system, already knowing the instantaneous speed of the thread, a passage point thereof (e.g., on the tail/tip apex or on the centre line) and the rotation speed of the cylinder, can be used to detect any process anomalies: for example, if the thread should have accelerated and is instead slowing down, a problem may have emerged which the system is capable of detecting.

Furthermore, the system is versatile, because it is not necessary for the speed measurement to occur in real time: it can also occur late (e.g., for calculation times or other reasons), as it is a useful datum for performing statistical processing on the process and above all to calculate the amount of thread processed overall.

A person skilled in the art may make numerous modifications and variations to the solutions described above so as to satisfy contingent and specific requirements.

The scope of protection of the present invention is defined by the following claims.

## Claims

1. A continuous image acquisition system (4) of a yarn (8) during winding comprising:
at least one vision system (12) comprising at least one camera (16) adapted to frame a section (20) of said yarn (8) in motion and to capture a plurality of frames of said section (20) of the yarn (8) in motion,
- a control unit (24), operatively connected to the vision system (12), configured to identify at least one identifying portion of the yarn (8) in at least a first of said frames and to search for the recurrence of said at least one identifying portion of yarn in at least a second of said frames, the at least a first frame being captured at a time instant t1 and the at least a second frame being captured at a time instant t2 which temporally follows the time instant t1,
- wherein the control unit (24) is programmed to determine the speed of the yarn as a function of the position of said at least one identifying portion in said at least a first frame and in said at least a second frame, and as a function of the elapsed time interval t2-t1,
**characterized in that**
the identifying portion of yarn (8) comprises a yarn anomaly,
wherein the vision system (12) comprises at least two mirrors (28,32).

2. A continuous image acquisition system (4) of a yarn (8) during winding according to claim 1, wherein said yarn (8) anomaly comprises defects and/or irregularities and/or hairs and/or chromatic variations and/or twisting variations of the yarn.

3. A continuous image acquisition system (4) of a yarn (8) during winding according to claim 1 or 2, wherein the control unit (24) is configured to determine the thread size of the yarn (8) starting from the position of said at least one identifying portion in said at least a first frame and in said at least a second frame.

4. A continuous image acquisition system (4) of a yarn (8) during winding according to claim 1, 2 or 3, wherein the control unit (24) is configured to process said at least one portion of yarn (8) by means of image processing software.

5. A continuous image acquisition system (4) of a yarn (8) during winding (4) according to any one of claims 1 to 4, wherein said at least one camera (16) is provided with a sampling frequency less than or equal to 1 kHz.

6. A continuous image acquisition system (4) of a yarn (8) during winding according to claim 5, wherein said sampling frequency of the camera (16) is constant.

7. A continuous image acquisition system (4) of a yarn (8) during winding (4) according to any one of claims 1 to 6, wherein the length of the section (20) of yarn (8) framed by the camera (16) in each frame is greater than or equal to 20 mm.

8. A continuous image acquisition system (4) of a yarn (8) during winding according to any one of claims 1 to 7, wherein the number of consecutive frames of said plurality of frames which are processed by the control unit (24) is greater than or equal to 3 and less than or equal to 7.

9. A continuous image acquisition system (4 ) of a yarn (8) during winding according to any one of claims 1 to 8, wherein said at least two mirrors (28, 32) are situated on the diametrically opposite side with respect to the camera (16), with respect to the yarn (8).

10. A continuous image acquisition system (4) of a yarn (8) during winding according to any one of claims 1 to 9, wherein said camera (16) and said at least two mirrors (28,32) are angularly equispaced by an angle (α) equal to 120°.

11. A continuous image acquisition system (4) of a yarn (8) during winding (4) according to any one of claims 1 to 10, wherein the vision system (12) comprises at least two cameras (16) placed at a predetermined distance along the direction (Y-Y) of the yarn (8) and configured to frame said section (20) of yarn (8) in motion and to capture said plurality of frames of said section (20) of the yarn (8) in motion.

12. A continuous image acquisition system (4) of a yarn (8) during winding according to claim 11, wherein said at least two cameras (16) are mutually synchronized.

13. A continuous image acquisition system (4) of a yarn (8) during winding according to any one of claims 1 to 12, wherein the system comprises at least one illuminator (36).

14. A continuous image acquisition system (4) of a yarn (8) during winding according to claim 13, wherein the at least one camera (16) and the at least one illuminator (36) are situated on the same side with respect to the yarn (8).

15. A continuous image acquisition system (4) of a yarn (8) during winding according to claim 13 or 14, wherein the at least one illuminator (36) is of the RGB type and/or with spectrum outside the visible range.

## Patentansprüche

1. System zur kontinuierlichen Bilderfassung (4) eines Garns (8) beim Aufwickeln, umfassend:
mindestens ein Sichtsystem (12), umfassend mindestens eine Kamera (16), die eingerichtet ist, einen Abschnitt (20) des Garns (8) in Bewegung einzurahmen und eine Mehrzahl von Einzelbildern des Abschnitts (20) des Garns (8) in Bewegung einzufangen,
- eine Steuereinheit (24), die operativ mit dem Sichtsystem (12) verbunden ist, die dazu konfiguriert ist, mindestens einen Identifikationsabschnitt des Garns (8) in mindestens einem ersten der Einzelbilder zu identifizieren und nach dem Wiederauftreten des mindestens einen Identifikationsabschnitts des Garns in mindestens einem zweiten der Einzelbilder zu suchen, wobei das mindestens eine erste Einzelbild zu einem Zeitpunkt t1 eingefangen wird und das mindestens eine zweite Einzelbild zu einem Zeitpunkt t2 eingefangen wird, der zeitlich dem Zeitpunkt t1 folgt,
- wobei die Steuereinheit (24) programmiert wird, die Geschwindigkeit des Garns in Abhängigkeit von der Position des mindestens einen Identifikationsabschnitts in dem mindestens einen ersten Einzelbild und in dem mindestens einen zweiten Einzelbild sowie in Abhängigkeit von dem vergangenen Zeitintervall t2- t1 zu bestimmen,
**dadurch gekennzeichnet, dass**
der Identifikationsabschnitt des Garns (8) eine Garnanomalie umfasst,
wobei das Sichtsystem (12) mindestens zwei Spiegel (28, 32) umfasst.

2. System zur kontinuierlichen Bilderfassung (4) eines Garns (8) beim Aufwickeln nach Anspruch 1, wobei die Garnanomalie (8) Defekte und/oder Unregelmäßigkeiten und/oder Haare und/oder chromatische Änderungen und/oder Verdrehungsänderungen des Garns umfasst.

3. System zur kontinuierlichen Bilderfassung (4) eines Garns (8) beim Aufwickeln nach Anspruch 1 oder 2, wobei die Steuereinheit (24) dazu konfiguriert ist, die Fadenabmessung des Garns (8) ausgehend von der Position des mindestens einen Identifikationsabschnitts in dem mindestens einen ersten Einzelbild und in dem mindestens einen zweiten Einzelbild zu bestimmen.

4. System zur kontinuierlichen Bilderfassung (4) eines Garns (8) beim Aufwickeln nach Anspruch 1, 2 oder 3, wobei die Steuereinheit (24) dazu konfiguriert ist, den mindestens einen Abschnitt des Garns (8) mittels einer Bildverarbeitungssoftware zu verarbeiten.

5. System zur kontinuierlichen Bilderfassung (4) eines Garns (8) beim Aufwickeln (4) nach einem der Ansprüche 1 bis 4, wobei die mindestens eine Kamera (16) mit einer Abtastfrequenz kleiner oder gleich 1 kHz versehen ist.

6. System zur kontinuierlichen Bilderfassung (4) eines Garns (8) beim Aufwickeln nach Anspruch 5, wobei die Abtastfrequenz der Kamera (16) konstant ist.

7. System zur kontinuierlichen Bilderfassung (4) eines Garns (8) beim Aufwickeln (4) nach einem der Ansprüche 1 bis 6, wobei die Länge des Abschnitts (20) des Garns (8), der von der Kamera (16) in jedem Einzelbild eingerahmt wird, größer oder gleich 20 mm ist.

8. System zur kontinuierlichen Bilderfassung (4) eines Garns (8) beim Aufwickeln nach einem der Ansprüche 1 bis 7, wobei die Anzahl der aufeinanderfolgenden Einzelbilder der Mehrzahl von Einzelbildern, die von der Steuereinheit (24) verarbeitet werden, größer als oder gleich 3 und kleiner als oder gleich 7 ist.

9. System zur kontinuierlichen Bilderfassung (4) eines Garns (8) beim Aufwickeln nach einem der Ansprüche 1 bis 8, wobei die mindestens zwei Spiegel (28, 32) auf der diametral gegenüberliegenden Seite in Bezug auf die Kamera (16), in Bezug auf das Garn (8), angeordnet sind.

10. System zur kontinuierlichen Bilderfassung (4) eines Garns (8) beim Aufwickeln nach einem der Ansprüche 1 bis 9, wobei die Kamera (16) und die mindestens zwei Spiegel (28,32) winkelmäßig gleichmäßig mit einem Winkel (α) von 120° angeordnet sind.

11. System zur kontinuierlichen Bilderfassung (4) eines Garns (8) beim Aufwickeln (4) nach einem der Ansprüche 1 bis 10, wobei das Sichtsystem (12) mindestens zwei Kameras (16) umfasst, die in einem vorbestimmten Abstand entlang der Richtung (Y-Y) des Garns (8) angeordnet sind und dazu konfiguriert sind, den Abschnitt (20) des Garns (8) in Bewegung einzurahmen und die Mehrzahl von Einzelbildern des Abschnitts (20) des Garns (8) in Bewegung einzufangen.

12. System zur kontinuierlichen Bilderfassung (4) eines Garns (8) beim Aufwickeln nach Anspruch 11, wobei die mindestens zwei Kameras (16) gegenseitig synchronisiert sind.

13. System zur kontinuierlichen Bilderfassung (4) eines Garns (8) beim Aufwickeln nach einem der Ansprüche 1 bis 12, wobei das System mindestens einen Illuminator (36) umfasst.

14. System zur kontinuierlichen Bilderfassung (4) eines Garns (8) beim Aufwickeln nach Anspruch 13, wobei die mindestens eine Kamera (16) und der mindestens ein Illuminator (36) auf derselben Seite in Bezug auf das Garn (8) angeordnet sind.

15. System zur kontinuierlichen Bilderfassung (4) eines Garns (8) beim Aufwickeln nach Anspruch 13 oder 14, wobei der mindestens ein Illuminator (36) des Typs RGB ist und/oder mit einem Spektrum außerhalb des sichtbaren Bereichs ausgebildet ist.

## Revendications

1. Un système d'acquisition continue d'images (4) d'un fil (8) pendant l'enroulement comprenant :
au moins un système de vision (12) comprenant au moins une caméra (16) adaptée à cadrer une section (20) dudit fil (8) en mouvement et à capturer une pluralité d'images de ladite section (20) du fil (8) en mouvement,
- une unité de commande (24), reliée de manière opérative au système de vision (12), configurée pour identifier au moins une portion d'identification du fil (8) dans au moins une première desdites images et pour rechercher la récurrence de ladite au moins une portion d'identification du fil dans au moins une seconde desdites images, ladite au moins une première image étant capturée à un instant t1 et ladite au moins une seconde image étant capturée à un instant t2 qui suit temporellement l'instant t1, où l'unité de commande (24) est programmée pour déterminer la vitesse du fil en fonction de la position de ladite au moins une portion d'identification dans ladite au moins une première image et dans ladite au moins une seconde image, et en fonction de l'intervalle de temps écoulé t2- t1,
**caractérisé en ce que**
la portion d'identification du fil (8) comprend une anomalie du fil,
où le système de vision (12) comprend au moins deux miroirs (28, 32).

2. Un système d'acquisition continue d'images (4) d'un fil (8) pendant l'enroulement selon la revendication 1, où ladite anomalie du fil (8) comprend des défauts et/ou des irrégularités et/ou des poils et/ou des variations chromatiques et/ou des variations de torsion du fil.

3. Un système d'acquisition continue d'images (4) d'un fil (8) pendant l'enroulement selon la revendication 1 ou 2, où l'unité de commande (24) est configurée pour déterminer le titre du fil (8) à partir de la position de ladite au moins une portion d'identification dans ladite au moins une première image et dans ladite au moins une seconde image.

4. Un système d'acquisition continue d'images (4) d'un fil (8) pendant l'enroulement selon la revendication 1, 2 ou 3, où l'unité de commande (24) est configurée pour traiter ladite au moins une portion de fil (8) au moyen d'un logiciel de traitement d'image.

5. Un système d'acquisition continue d'images (4) d'un fil (8) pendant l'enroulement (4) selon l'une quelconque des revendications 1 à 4, où ladite au moins une caméra (16) est pourvue d'une fréquence d'échantillonnage inférieure ou égale à 1 kHz.

6. Un système d'acquisition continue d'images (4) d'un fil (8) pendant l'enroulement selon la revendication 5, où ladite fréquence d'échantillonnage de la caméra (16) est constante.

7. Un système d'acquisition continue d'images (4) d'un fil (8) pendant l'enroulement (4) selon l'une quelconque des revendications 1 à 6, où la longueur de la section (20) de fil (8) cadrée par la caméra (16) dans chaque image est supérieure ou égale à 20 mm.

8. Un système d'acquisition continue d'images (4) d'un fil (8) pendant l'enroulement selon l'une quelconque des revendications 1 à 7, où le nombre d'images consécutives de ladite pluralité d'images qui sont traitées par l'unité de commande (24) est supérieur ou égal à 3 et inférieur ou égal à 7.

9. Un système d'acquisition continue d'images (4 d'un fil (8) pendant l'enroulement selon l'une quelconque des revendications 1 à 8, où lesdites au moins deux miroirs (28, 32) sont situés du côté diamétralement opposé par rapport à la caméra (16), par rapport au fil (8).

10. Un système d'acquisition continue d'images (4) d'un fil (8) pendant l'enroulement selon l'une quelconque des revendications 1 à 9, où ladite caméra (16) et lesdits au moins deux miroirs (28,32) sont angulairement équidistants d'un angle (α) égal à 120 ° .

11. Un système d'acquisition continue d'images (4) d'un fil (8) pendant l'enroulement (4) selon l'une quelconque des revendications 1 à 10, où le système de vision (12) comprend au moins deux caméras (16) placées à une distance prédéterminée le long de la direction (Y-Y) du fil (8) et configurées pour cadrer ladite section (20) de fil (8) en mouvement et pour capturer ladite pluralité d'images de ladite section (20) du fil (8) en mouvement.

12. Un système d'acquisition continue d'images (4) d'un fil (8) pendant l'enroulement selon la revendication 11, où lesdites au moins deux caméras (16) sont mutuellement synchronisées.

13. Un système d'acquisition continue d'images (4) d'un fil (8) pendant l'enroulement selon l'une quelconque des revendications 1 à 12, où le système comprend au moins un illuminateur (36).

14. Un système d'acquisition continue d'images (4) d'un fil (8) pendant l'enroulement selon la revendication 13, où ladite au moins une caméra (16) et ledit au moins un illuminateur (36) sont situés du même côté par rapport au fil (8).

15. Un système d'acquisition continue d'images (4) d'un fil (8) pendant l'enroulement selon la revendication 13 ou 14, où ledit au moins un illuminateur (36) est du type RGB et/ou avec un spectre en dehors de la gamme visible.
